# EUROPEAN PATENT APPLICATION

(11) **EP 4 848 512 A1**
(43) Date of publication of application: **02.12.2026**
(21) Application number: 25212142.1
(22) Date of filing: 29.10.2025
(51) Int. Cl.: H02J 3/001, H02J 3/06, H02J 3/38

(54) **GRID-CONNECTED SYSTEM, PROGRAM PRODUCT, GRID-CONNECTED DEVICE, AND ANTI-REVERSE POWER FLOW METHOD AND CONTROLLER FOR GRID-CONNECTED DEVICE**

(30) Priority: 30.05.2025 CN 202510726397; 29.09.2025 CN 202511416071
(71) Applicant: Sunshare Power Technology Co., Ltd., Nanjing Jiangsu 211153 (CN)
(72) Inventor: ZHENG, Benben, Nanjing 211153 (CN); HE, Peng, Nanjing 211153 (CN)
(74) Representative: Rooney, John-Paul

(57) **Abstract**

A grid-connected system, a program product, a grid-connected device, and an anti-reverse power flow method and a controller for the grid-connected device are provided. According to the anti-reverse power flow method, the grid-connected device meeting a first predetermined reverse power flow condition indicates that reverse power flow occurs in the grid-connected device, and the grid-connected device not meeting a second predetermined reverse power flow condition indicates that no reverse power flow occurs in the grid-connected device. The anti-reverse power flow method eliminates the reverse power flow in the grid-connected device by implementing corresponding control in the case that the reverse power flow occurs in the grid-connected device, enabling an anti-reverse power flow function for the grid-connected device. In addition, an output power of the grid-connected device is changed to a first predetermined value, causing an abrupt change in the output power of the grid-connected device, and thus causing an abrupt change in a power transmitted from a power grid to a load connected to the grid-connected device. In this way, a duration of the reverse power flow is reduced and the anti-reverse power flow effectiveness of the grid-connected device is improved.

## Description

### CROSS REFERENCE TO RELATED APPLICATIONS

The present application claims the priority to Chinese Patent Application No. 202511416071.4, titled "GRID-CONNECTED SYSTEM, PROGRAM PRODUCT, GRID-CONNECTED DEVICE, AND ANTI-REVERSE POWER FLOW METHOD AND CONTROLLER FOR GRID-CONNECTED DEVICE", filed on September 29, 2025, and the priority to Chinese Patent Application No. 202510726397.0, titled "GRID-CONNECTED SYSTEM, PROGRAM PRODUCT, GRID-CONNECTED DEVICE, AND ANTI-REVERSE POWER FLOW METHOD AND CONTROLLER FOR GRID-CONNECTED DEVICE", filed on May 30, 2025, with the China National Intellectual Property Administration.

### FIELD

The present disclosure relates to the technical field of grid connection, and in particular to a grid connected system, a program product, a grid-connected device, and an anti-reverse power flow method and a controller for the grid-connected device.

### BACKGROUND

At present, for purpose of the safety and stability of a power grid, power grid companies strictly prohibit unauthorized feeding of electricity from a grid-connected device into the power grid, that is, reverse power flow generated by the grid-connected device is forbidden. Therefore, most grid-connected devices are provided with an anti-reverse power flow function, that is, a function of preventing the generation of the reverse power flow.

However, in the case of a significant fluctuation of a load power, the reverse power flow may be generated even if the grid-connected device is provided with the anti-reverse power flow function, potentially compromising the safety and stability of the power grid.

Therefore, how to improve the anti-reverse power flow effectiveness of a grid-connected device is a technical issue that needs to be addressed urgently.

### SUMMARY

In view of this, a grid-connected system, a program product, a grid-connected device, and an anti-reverse power flow method and a controller for the grid-connected device are provided in the present disclosure to improve the anti-reverse power flow effectiveness of the grid-connected device.

To achieve the objective described above, the following technical solutions are provided according to embodiments of the present disclosure.

In a first aspect of the present disclosure, an anti-reverse power flow method for a grid-connected device is provided. The anti-reverse power flow method includes:
determining whether the grid-connected device meets a first predetermined reverse power flow condition; and
changing, in response to the grid-connected device meeting the first predetermined reverse power flow condition, an output power of the grid-connected device to a first predetermined value to control the grid-connected device not to meet a second predetermined reverse power flow condition.

In an embodiment, the first predetermined value equals 0.

In an embodiment, after the changing an output power of the grid-connected device to a first predetermined value to control the grid-connected device not to meet a second predetermined reverse power flow condition, or while the determining whether the grid-connected device meets a first predetermined reverse power flow condition, the anti-reverse power flow method further includes:
gradually increasing, in response to the grid-connected device not meeting a first predetermined maximum power condition, the output power of the grid-connected device to control the grid-connected device to meet a second predetermined maximum power condition.

In an embodiment, the first predetermined maximum power condition includes: a target power being less than or equal to a second predetermined value. The target power represents a power flowing from a power grid to a load connected to the grid-connected device.

The second predetermined maximum power condition includes: the target power being less than or equal to a third predetermined value.

In an embodiment, after the changing an output power of the grid-connected device to a first predetermined value to control the grid-connected device not to meet a second predetermined reverse power flow condition, the anti-reverse power flow method further includes:
gradually reducing, in response to the grid-connected device meeting a third predetermined reverse power flow condition, the output power of the grid-connected device to control the grid-connected device not to meet a fourth predetermined reverse power flow condition.

In an embodiment, the third predetermined reverse power flow condition includes: the target power being less than a fourth predetermined value. The target power represents a power flowing from a power grid to a load connected to the grid-connected device.

The fourth predetermined reverse power flow condition includes: the target power being less than a fifth predetermined value.

In an embodiment, the first predetermined reverse power flow condition includes: the target power being less than a sixth predetermined value. The target power represents a power flowing from a power grid to a load connected to the grid-connected device.

The second predetermined reverse power flow condition includes: the target power being less than a seventh predetermined value.

In a second aspect of the present disclosure, a grid-connected device is provided. The grid-connected device is configured to perform the anti-reverse power flow method for a grid-connection device according to any embodiment of the first aspect of the present disclosure.

In a third aspect of the present disclosure, a grid-connected system is provided. The grid-connected system includes the grid-connected device according to the second aspect of the present disclosure.

An alternating-current (AC) side of the grid-connected device is configured to be connected to a load and a power grid.

In an embodiment, the grid-connected system further includes an acquisition apparatus and a controller.

The AC side of the grid-connected device is connected to one side of the acquisition apparatus, and the other side of the acquisition apparatus is connected to the power grid.

The acquisition apparatus is configured to acquire the target power. The target power represents a power flowing from a power grid to a load connected to the grid-connected device.

The controller is communicatively connected to the acquisition apparatus and the grid-connected device.

The controller is configured to monitor an operating state of the grid-connected device and the target power fed back by the acquisition apparatus, and perform the anti-reverse power flow method for a grid-connected device according to any embodiment of the first aspect of the present disclosure.

It can be seen from the above technical solutions that an anti-reverse power flow method for a grid-connected device is provided in the present disclosure. According to the anti-reverse power flow method, the grid-connected device meeting a first predetermined reverse power flow condition indicates that reverse power flow occurs in the grid-connected device, and the grid-connected device not meeting a second predetermined reverse power flow condition indicates that no reverse power flow occurs in the grid-connected device. The anti-reverse power flow method eliminates the reverse power flow in the grid-connected device by implementing corresponding control in the case that the reverse power flow occurs in the grid-connected device, enabling an anti-reverse power flow function for the grid-connected device. In addition, an output power of the grid-connected device is changed to a first predetermined value, causing an abrupt change in the output power of the grid-connected device, and thus causing an abrupt change in a power transmitted from a power grid to a load connected to the grid-connected device. In this way, a duration of the reverse power flow is reduced and the anti-reverse power flow effectiveness of the grid-connected device is improved.

### BRIEF DESCRIPTION OF THE DRAWINGS

To more clearly describe the technical solutions in the embodiments of the present disclosure or the conventional technology, drawings to be applied in the embodiments or the conventional technology are briefly described hereinafter. It is apparent that the drawings described hereinafter are merely used for illustrating the embodiments of the present disclosure, and those skilled in the art can obtain other drawings according to the drawings without any creative effort.
FIG. 1 to FIG. 3 each are a flowchart showing an implementation of an anti-reverse power flow method for a grid-connected device according to an embodiment of the present disclosure;
FIG. 4 is a schematic diagram showing changes in an output power of a grid-connected device in the conventional technology;
FIG. 5 is a schematic diagram showing changes in an output power of a grid-connected device according to the present disclosure; and
FIG. 6 and FIG. 7 each are a schematic structural diagram showing an implementation of a grid-connected system according to an embodiment of the present disclosure.

### DETAILED DESCRIPTION

The technical solutions in the embodiments of the present application are described clearly and completely hereinafter in conjunction with the accompanying drawings in the embodiments of the present disclosure. It is apparent that the described embodiments are merely some rather than all embodiments of the present disclosure. Any other embodiments obtained based on the embodiments of the present disclosure by those skilled in the art without any creative effort fall within the scope of protection of the present disclosure.

The relationship terms such as "first" and "second" herein are only used to distinguish one entity or operation from another, rather than to necessitate or imply that the actual relationship or order exists between the entities or operations. Furthermore, terms "include", "comprise" or any other variants thereof are intended to be non-exclusive. Therefore, a process, method, article or device including a series of elements includes not only these elements but also other elements that are not clearly enumerated, or further includes elements inherent in the process, method, article or device. Unless expressively limited otherwise, an element limited by "comprising/including a(n)..." does not exclude existence of another identical element in such process, method, article or device including the element.

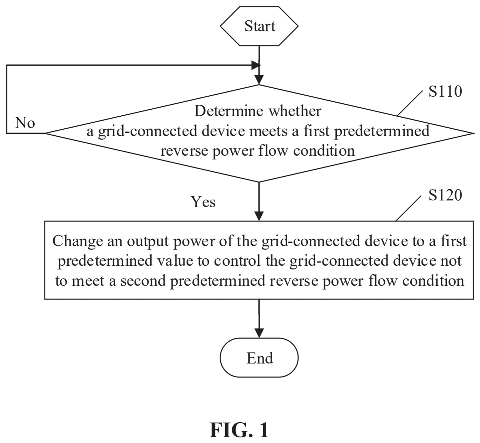

To improve the anti-reverse power flow effectiveness of a grid-connected device, an anti-reverse power flow method for the grid-connected device is provided according to an embodiment of the present disclosure. FIG. 1 shows a specific procedure of the anti-reverse power flow method. The anti-reverse power flow method includes the following steps S110 and S120.

In step S110, it is determined whether a grid-connected device meets a first predetermined reverse power flow condition.

In a case that the grid-connected device meets the first predetermined reverse power flow condition, step S120 is performed. In a case that the grid-connected device does not meet the first predetermined reverse power flow condition, step S110 is performed again.

Generally, an alternating-current (AC) side of the grid-connected device is configured to be connected to a load and a power grid. In a case that an output power of the grid-connected device is less than a power of the load, both the grid-connected device and the power grid output electrical energy to the load. In a case that the output power of the grid-connected device is greater than the power of the load, the grid-connected device outputs electrical energy to both the load and the power grid. When the grid-connected device outputs electrical energy to the power grid, reverse power flow occurs in the grid-connected device. When the power grid outputs electrical energy to the load, no reverse power flow occurs in the grid-connected device.

The first predetermined reverse power flow condition is a condition for determining whether reverse power flow occurs in the grid-connected device. That is, in a case that the grid-connected device meets the first predetermined reverse power flow condition, it is determined that reverse power flow occurs in the grid-connected device; and in a case that the grid-connected device does not meet the first predetermined reverse power flow condition, it is determined that no reverse power flow occurs in the grid-connected device.

In step S120, the output power of the grid-connected device is changed to a first predetermined value to control the grid-connected device not to meet a second predetermined reverse power flow condition.

The second predetermined reverse power flow condition is a condition for determining whether reverse power flow occurs in the grid-connected device. That is, in a case that the grid-connected device meets the second predetermined reverse power flow condition, it is determined that reverse power flow occurs in the grid-connected device; and in a case that the grid-connected device does not meet the second predetermined reverse power flow condition, it is determined that no reverse power flow occurs in the grid-connected device.

In an embodiment, the second predetermined reverse power flow condition is identical to or different from the first predetermined reverse power flow condition, which is not limited herein and depends on the actual situation. All implementations fall within the protection scope of the present disclosure. Typically, the second predetermined reverse power flow condition is identical to the first predetermined reverse power flow condition.

In the embodiment, the grid-connected device meeting a first predetermined reverse power flow condition indicates that reverse power flow occurs in the grid-connected device, and the grid-connected device not meeting a second predetermined reverse power flow condition indicates that no reverse power flow occurs in the grid-connected device. The anti-reverse power flow method eliminates the reverse power flow in the grid-connected device by implementing corresponding control in the case that the reverse power flow occurs in the grid-connected device, enabling an anti-reverse power flow function for the grid-connected device. In addition, an output power of the grid-connected device is changed to a first predetermined value, causing an abrupt change in the output power of the grid-connected device, and thus causing an abrupt change in a power transmitted from a power grid to a load connected to the grid-connected device. In this way, a duration of the reverse power flow is reduced and the anti-reverse power flow effectiveness of the grid-connected device is improved.

According to another embodiment of the present disclosure, an implementation of the first predetermined reverse power flow condition and an implementation of the second predetermined reverse power flow condition are provided. The implementations are described as follows.

The implementation of the first predetermined reverse power flow condition is that a target power is less than a sixth predetermined value.

The implementation of the second predetermined reverse power flow condition is that the target power is less than a seventh predetermined value.

The target power represents a power flowing from a power grid to a load connected to the grid-connected device, hereinafter referred to as a power flowing out from the power grid. In practice, a target power of greater than 0 indicates that the power flowing out from the power grid is greater than 0. A target power of less than 0 indicates that the power flowing out from the power grid is less than 0, that is, the target power represents a power flowing into the power grid.

If the target power is less than the sixth predetermined value, the target power is low. On the contrary, if the target power is greater than or equal to the sixth predetermined value, the target power is not low. In practice, the sixth predetermined value is determined depending on the actual situation, which is not limited herein. Typically, the sixth predetermined value is equal to 50W.

If the target power is less than the seventh predetermined value, the target power is low. On the contrary, if the target power is greater than or equal to the seventh predetermined value, the target power is not low. In practice, the seventh predetermined value is determined depending on the actual situation, which is not limited herein. Typically, the seventh predetermined value is equal to 50W.

If the second predetermined reverse power flow condition is identical to the first predetermined reverse power flow condition, the seventh predetermined value is equal to the sixth predetermined value. If the second predetermined reverse power flow condition is different from the first predetermined reverse power flow condition, the seventh predetermined value is not equal to the sixth predetermined value.

In an embodiment, the seventh predetermined value is less than the sixth predetermined value. For example, the seventh predetermined value is equal to 0.

In the embodiment, typically, in the case of reverse power flow occurring in the grid-connected device, the grid-connected device outputs electrical energy to the power grid, that is, the target power is less than 0, meaning that the target power is low; and in the case of no reverse power flow occurring in the grid-connected device, the power grid outputs electrical energy to the load, that is, the target power is greater than 0, meaning that the target power is not low. Therefore, a low target power indicates that reverse power flow occurs in the grid-connected device, and a target power that is not low indicates that no reverse power flow occurs in the grid-connected device. Since the target power being less than the sixth predetermined value indicates that the target power is low and the target power being greater than or equal to the sixth predetermined value indicates that the target power is not low, the target power being less than the sixth predetermined value further indicates that reverse power flow occurs in the grid-connected device, and the target power being greater than or equal to the sixth predetermined value further indicates that no reverse power flow occurs in the grid-connected device. Therefore, the target power being less than the sixth predetermined value may serve as a predetermined reverse power flow condition, that is, the first predetermined reverse power flow condition. Similarly, the target power being less than the seventh predetermined value may serve as a predetermined reverse power flow condition, that is, the second predetermined reverse power flow condition.

In other words, based on the case that the target power less than 0 indicates reverse power flow and the target power greater than 0 indicates no reverse power flow, a certain margin may be set for determining the occurrence of reverse power flow, such as the aforementioned sixth predetermined value or the seventh predetermined value. In this way, if the target power is less than the sixth predetermined value or the seventh predetermined value, it can be considered that there is a high probability of reverse power flow occurring, allowing for early identification of subsequent reverse power flow.

In an embodiment, if it is determined in advance based on the target power that reverse power flow occurs in the grid-connected device, the grid-connected device meets the first predetermined reverse power flow condition. If it is determined based on the target power that no reverse power flow occurs in the grid-connected device, the grid-connected device does not meet the second predetermined reverse power flow condition.

The above merely describes an implementation of the first predetermined reverse power flow condition and an implementation of the second predetermined reverse power flow condition. In practice, the implementations include but are not limited to the above embodiments, and no specific limitations are imposed herein, all of which fall within the protection scope of the present disclosure.

According to another embodiment of present disclosure, another implementation of the anti-reverse power flow method for a grid-connected device is provided. The implementation, based on the implementations according to the above-described embodiment, further defines that the first predetermined value is equal to 0, that is, the output power of the grid-connected device is changed to 0.

Specifically, with the first predetermined value equaling 0, the changing the output power of the grid-connected device to the first predetermined value is implemented as: switching the grid-connected device to a shutdown state or a standby state.

It should be noted that the switching the grid-connected device to a shutdown state or a standby state is mature in the conventional technology and is not elaborated herein.

In the embodiment, since the first predetermined value is equal to 0, the power of the load is entirely supplied by the power grid and no reverse power flow occurs in the grid-connected device.

With the first predetermined value equaling 0, the grid-connected device is switched to the shutdown state or the standby state. Therefore, after the output power of the grid-connected device is changed to the first predetermined value, the power of the load is entirely supplied by the power grid, and therefore no reverse power flow occurs in the grid-connected device. Further, since a duration required to switch the grid-connected device to the shutdown state or the standby state is short, a duration of the reverse power flow is reduced, thereby improving the anti-reverse power flow effectiveness of the grid-connected device.

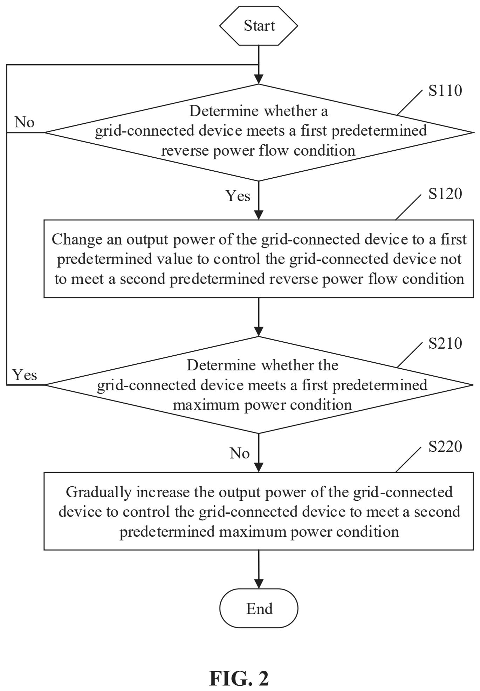

According to another embodiment of the present disclosure, another implementation of the anti-reverse power flow method for a grid-connected device is provided, and the specific procedure of the implementation is referred to in FIG. 2 (FIG. 2 only shows an example where step S210 is performed after step S120). In this implementation, after performing S120 or while performing S110 according to any implementation of the above-described embodiments, the anti-reverse power flow method further includes the following steps S210 and S220.

In step S210, it is determined whether the grid-connected device meets the first predetermined maximum power condition.

In a case that the grid-connected device does not meet the first predetermined maximum power condition, step S220 is performed. In a case that the grid-connected device meets the first predetermined maximum power condition, the step S110 is performed again.

The first predetermined maximum power condition is a condition for determining whether the grid-connected device reaches a maximum output power. That is, the grid-connected device meeting the first predetermined maximum power condition indicates that the grid-connected device reaches the maximum output power; and the grid-connected device not meeting the first predetermined maximum power condition indicates that the grid-connected device does not reach the maximum output power.

In step S220, an output power of the grid-connected device is gradually increased to control the grid-connected device to meet a second predetermined maximum power condition.

The second predetermined maximum power condition is a condition for determining whether the grid-connected device reaches a maximum output power. That is, the grid-connected device meeting the second predetermined maximum power condition indicates that the grid-connected device reaches the maximum output power; and the grid-connected device not meeting the second predetermined maximum power condition indicates that the grid-connected device does not reach the maximum output power.

In an example, the second predetermined maximum power condition is identical to the first predetermined maximum power condition.

In another example, the second predetermined maximum power condition is different from the first predetermined maximum power condition.

In the example where the second predetermined maximum power condition is different from the first predetermined maximum power condition, when a power of a load fluctuates slightly after the grid-connected device meets the second predetermined maximum power condition, the grid-connected device still meets the first predetermined maximum power condition, and the output power of the grid-connected device is not gradually increased. In this way, the frequency of regulating the output power of the grid-connected device is reduced, that is, the output power of the grid-connected device does not change frequently.

The above two examples show different relationships between the second predetermined maximum power condition and the first predetermined maximum power condition, which are not limited herein and depend on the actual situation. All relationships fall within the protection scope of the present disclosure. Typically, the second predetermined maximum power condition is different from the first predetermined maximum power condition.

In an example, gradually increasing the output power of the grid-connected device is implemented as: performing maximum power point tracking (MPPT) control on the grid-connected device.

It should be noted that the performing MPPT control on the grid-connected device is mature in the conventional technology and is not elaborated herein.

The above example illustrates only an implementation of gradually increasing the output power of the grid-connected device. In practice, the implementation includes but is not limited thereto and is determined depending on the actual situation, and thus is not limited herein. All implementations fall within the protection scope of the present disclosure.

In the embodiment, the grid-connected device not meeting the first predetermined maximum power condition indicates that the grid-connected device does not reach the maximum output power, and the grid-connected device meeting the second predetermined maximum power condition indicates that the grid-connected device reaches the maximum output power. In the implementation, the output power of the grid-connected device is gradually increased to cause the grid-connected device to reach the maximum output power in the case that the grid-connected device does not reach the maximum output power. In this way, the output power of the grid-connected device is increased as much as possible, thereby reducing the duration of supplying power by the power grid to the load.

In other words, on the basis of preventing reverse power flow, the output power of the grid-connected device is increased as much as possible according to the embodiment, thereby improving the economic efficiency of the system.

According to another embodiment of the present disclosure, an implementation of the first predetermined maximum power condition and an implementation of the second predetermined maximum power condition are provided. The implementations are described as follows.

The implementation of the first predetermined maximum power condition is that the target power is less than or equal to a second predetermined value.

The implementation of the second predetermined maximum power condition is that the target power is less than or equal to a third predetermined value.

It should be noted that the target power is described in detail above and is not repeated herein.

The target power being less than or equal to the second predetermined value indicates that the target power is low. On the contrary, the target power being greater than the second predetermined value indicates that the target power is not low. In practice, the second predetermined value is determined depending on the actual situation, which is not limited herein. Typically, the second predetermined value is equal to 150W.

The target power being less than or equal to the third predetermined value indicates that the target power is low. On the contrary, the target power being greater than the third predetermined value indicates that the target power is not low. In practice, the third predetermined value is determined depending on the actual situation, which is not limited herein. Typically, the third predetermined value is equal to 100W.

In a case that the second predetermined maximum power condition is identical to the first predetermined maximum power condition, the third predetermined value is equal to the second predetermined value. In a case that the second predetermined maximum power condition is different from the first predetermined maximum power condition, the third predetermined value is not equal to the second predetermined value.

In the embodiment, typically, when the grid-connected device reaches the maximum output power, the target power is low; and when the grid-connected device does not reach the maximum output power, the target power is not low. That is, if the target power is low, the grid-connected device reaches the maximum output power; and if the target power is not low, the grid-connected device does not reach the maximum output power. Since the target power being less than or equal to the second predetermined value indicates that the target power is low, and the target power being greater than the second predetermined value indicates that the target power is not low, the target power being less than or equal to the second predetermined value further indicates that the grid-connected device reaches the maximum output power, and the target power being greater than the second predetermined value further indicates that the grid-connected device does not reach the maximum output power. Therefore, the target power being less than or equal to the second predetermined value may serve as a predetermined maximum power condition, that is, the first predetermined maximum power condition. Similarly, the target power being less than or equal to the third predetermined value may serve as a predetermined maximum power condition, that is, the second predetermined maximum power condition.

In other words, when performing step S210, whether the grid-connected device reaches the maximum output power may be determined based on the magnitude of the target power. If the target power is relatively low, that is, the power flowing from the power grid to the load is low, for example, less than the second predetermined value, it indicates that most of the load's power supply comes from the grid-connected device, and thus the grid-connected device is considered to have reached the maximum output power. Conversely, if the target power is relatively high, that is, the power flowing from the power grid to the load is high, for example, greater than the second predetermined value, it indicates that most of the load's power supply comes from the power grid, while the output power of the grid-connected device is relatively low, and therefore the grid-connected device is considered not to have reached the maximum output power. When performing step S220, whether the grid-connected device reaches the maximum output power may further be determined based on the magnitude of the target power. Moreover, in both step S210 and step S220, the two predetermined values for determining whether the grid-connected device reaches the maximum output power, that is, the aforementioned second predetermined value and the third predetermined value, may have different numerical values. For example, the third predetermined value may be set smaller than the second predetermined value to reduce the frequency of adjustments to the output power of the grid-connected device.

The above describes merely an implementation of the first predetermined maximum power condition and an implementation of the second predetermined maximum power condition. In practice, the implementations include but are not limited thereto and all implementations fall within the protection scope of the present disclosure.

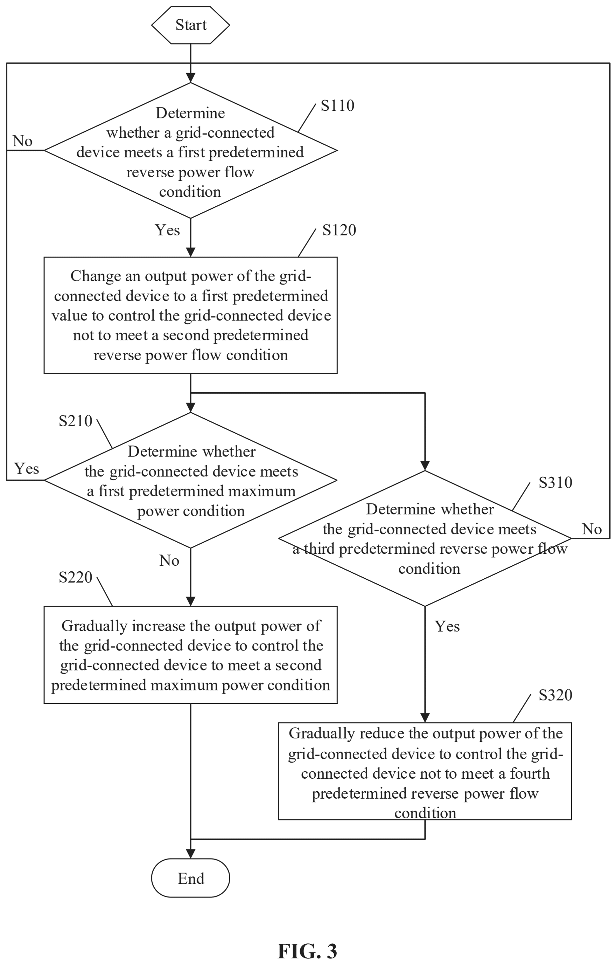

According to another embodiment of the present disclosure, another implementation of the anti-reverse power flow method for a grid-connected system is provided, and the specific procedure of the implementation is referred to in FIG. 3 (FIG. 3 shows the procedure on basis of FIG. 2). The anti-reverse power flow method according to the implementation further includes the following steps S310 and S320 after step S120 described in an implementation of any one of the above embodiments.

In step S310, it is determined whether the grid-connected device meets a third predetermined reverse power flow condition.

In a case that the grid-connected device meets the third predetermined reverse power flow condition, step S320 is performed. In a case that the grid-connected device does not meet the third predetermined reverse power flow condition, step S110 is performed again.

The third predetermined reverse power flow condition is a condition for determining whether reverse power flow occurs in the grid-connected device. That is, if the grid-connected device meets the third predetermined reverse power flow condition, it is determined that reverse power flow occurs in the grid-connected device; and if the grid-connected device does not meet the third predetermined reverse power flow condition, it is determined that no reverse power flow occurs in the grid-connected device.

In an embodiment, the third predetermined reverse power flow condition is identical to or different from the first predetermined reverse power flow condition, which is not limited herein and depends on the actual situation. All implementations fall within the protection scope of the present disclosure. Typically, the third predetermined reverse power flow condition is identical to the first predetermined reverse power flow condition.

In step S320, the output power of the grid-connected device is gradually reduced to control the grid-connected device not to meet a fourth predetermined reverse power flow condition.

The fourth predetermined reverse power flow condition is a condition for determining whether reverse power flow occurs in the grid-connected device. That is, if the grid-connected device meets the fourth predetermined reverse power flow condition, it is determined that reverse power flow occurs in the grid-connected device; and if the grid-connected device does not meet the fourth predetermined reverse power flow condition, it is determined that no reverse power flow occurs in the grid-connected device.

In an example, the fourth predetermined reverse power flow condition is identical to the third predetermined reverse power flow condition.

In another example, the fourth predetermined reverse power flow condition is different from the third predetermined reverse power flow condition.

In the example where the fourth predetermined reverse power flow condition is different from the third predetermined reverse power flow condition, when a power of a load fluctuates slightly after the grid-connected device does not meet the fourth predetermined reverse power flow condition, the grid-connected device does not immediately meet the third predetermined reverse power flow condition, and the output power of the grid-connected device is not gradually reduced. In this way, the frequency of regulating the output power of the grid-connected device is reduced, that is, the output power of the grid-connected device does not change frequently.

The above two examples show different relationships between the fourth predetermined reverse power flow condition and the third predetermined reverse power flow condition, which are not limited herein and depend on the actual situation. All relationships fall within the protection scope of the present disclosure. Typically, the fourth predetermined reverse power flow condition is different from the third predetermined reverse power flow condition.

According to the implementation of the embodiment, the output power of the grid-connected device is gradually reduced when the grid-connected device does not meet the second predetermined reverse power flow condition but meets the third predetermined reverse power flow condition, to control the grid-connected device not to meet the fourth predetermined reverse power flow condition. Thus, comparing with the second predetermined reverse power flow condition, the third predetermined reverse power flow condition and the fourth predetermined reverse power flow condition are more reliable in determining whether reverse power flow occurs in the grid-connected device. In this way, using the anti-reverse power flow method provided according to the embodiment to control the grid-connected device increases the probability of no reverse power flow occurring in the regulated grid-connected system under a condition that a power of a load remains unchanged.

In other words, by performing steps S310 and S320, the margin between the current operating state of the grid-connected device and the occurrence of reverse power flow may be increased, thereby reducing the likelihood of reverse power flow occurrence.

It should be noted that when both steps S210 and S310 are required to be performed after step S120, steps S210 and S310 are simultaneously performed.

According to another embodiment of the present disclosure, an implementation of the third predetermined reverse power flow condition and an implementation of the fourth predetermined reverse power flow condition are provided. The implementations are described as follows.

The implementation of the third predetermined reverse power flow condition is that the target power is less than a fourth predetermined value.

The implementation of the fourth predetermined reverse power flow condition is that the target power is less than a fifth predetermined value.

It should be noted that the target power is described in detail above and is not repeated herein.

The target power being less than the fourth predetermined value indicates that the target power is low. On the contrary, the target power being greater than or equal to the fourth predetermined value indicates that the target power is not low. In practice, the fourth predetermined value is determined depending on the actual situation, which is not limited herein. Typically, the fourth predetermined value is equal to 50W.

The target power being less than the fifth predetermined value indicates that the target power is low. On the contrary, the target power being greater than or equal to the fifth predetermined value indicates that the target power is not low. In practice, the fifth predetermined value is determined depending on the actual situation, which is not limited herein. Typically, the fifth predetermined value is equal to 70W.

For the target power being less than the sixth predetermined value in an implementation of the first predetermined reverse power flow condition, if the third predetermined reverse power flow condition is identical to the first predetermined reverse power flow condition, the fourth predetermined value is equal to the sixth predetermined value; and if the third predetermined reverse power flow condition is different from the first predetermined reverse power flow condition, the fourth predetermined value is not equal to the sixth predetermined value.

If the fourth predetermined reverse power flow condition is identical to the third predetermined reverse power flow condition, the fifth predetermined value is equal to the fourth predetermined value. If the fourth predetermined reverse power flow condition is different from the third predetermined reverse power flow condition, the fifth predetermined value is not equal to the fourth predetermined value.

In the embodiment, typically, in the case that reverse power flow occurs in the grid-connected device, the grid-connected device outputs electrical energy to the power grid. In this case, the target power is less than zero, meaning that the target power is low. In the case that no reverse power flow occurs in the grid-connected device, the power grid outputs electrical energy to a load. In this case, the target power is greater than zero, meaning that the target power is not low. Therefore, a low target power indicates that reverse power flow occurs in the grid-connected device, and a target power that is not low indicates that no reverse power flow occurs in the grid-connected device. Since the target power being less than the fourth predetermined value indicates that the target power is low and the target power being greater than or equal to the fourth predetermined value indicates that the target power is not low, the target power being less than the fourth predetermined value further indicates that reverse power flow occurs in the grid-connected device, and the target power being greater than or equal to the fourth predetermined value further indicates that no reverse power flow occurs in the grid-connected device. Therefore, the target power being less than the fourth predetermined value may serve as a predetermined reverse power flow condition, that is, the third predetermined reverse power flow condition. Similarly, the target power being less than the fifth predetermined value may serve as a predetermined reverse power flow condition, that is, the fourth predetermined reverse power flow condition.

In other words, after step S120, no reverse power flow occurs in the grid-connected device, and whether the target power is relatively low may be determined based on step S310, for example, whether the target power is less than the fourth predetermined value. If the target power is low, it indicates that the grid-connected device remains susceptible to reverse power flow. Therefore, step S320 is performed to reduce the output power of the grid-connected device, thereby increasing the target power and reducing the likelihood of reverse power flow occurrence. Moreover, when performing step S320, the process may use the target power reaching the fifth predetermined value as a termination condition. In an example, the fifth predetermined value may be set greater than the fourth predetermined value to reduce the frequency of adjustments to the output power of the grid-connected device.

In practical applications, if the first predetermined value is 0, after step S120, steps S210 and S220 may be performed first to adjust the output power of the grid-connected device to a positive value, followed by steps S310 and S320. If the first predetermined value is a positive value, after step S120, steps S210 and S310 may be performed simultaneously or sequentially, with no specific order imposed between steps S210 and S310, depending on the specific application environment.

The above described are an implementation of the third predetermined reverse power flow condition and an implementation of the fourth predetermined reverse power flow condition. In practice, the implementations include but are not limited thereto. The implementations are not limited herein and all implementations fall within the protection scope of the present disclosure.

It is assumed that a power of a load is 500W and an output power of a grid-connected device is 400W. Thus, a target power is 100W. It is also assumed that a sixth predetermined value is 50W, a second predetermined value is 150W, and a third predetermined value is 100W. If the power of the load abruptly decreases to 200W at a time instant t1, the target power changes to -200W. The target power is less than the sixth predetermined value, meaning that the grid-connected device meets a first predetermined reverse power flow condition. Therefore, an anti-reverse power flow mechanism is triggered. It consumes a certain amount of time to control the grid-connected device, and the time from the time instant t1 to a time instant t2 is determined as the certain amount of time. Thus, the output power of the grid-connected device is actually changed to the first predetermined value at the time instant t2.

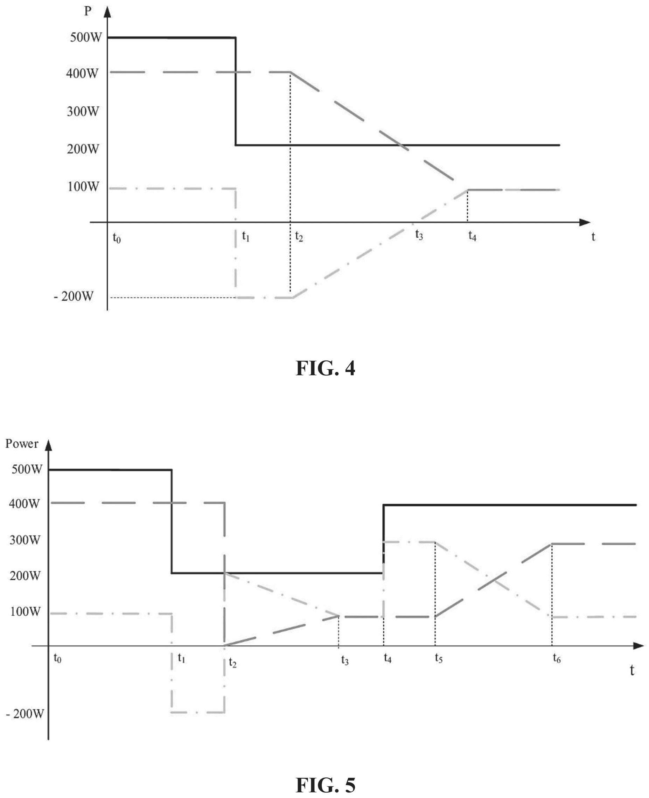

In the conventional technology, the output power of the grid-connected device is gradually reduced from the time instant t2, as shown in FIG. 4. According to the present disclosure, the grid-connected device is switched to a shutdown state or a standby state at the time instant t2, that is, the output power of the grid-connected device is changed to 0 at the time instant t2, as shown in FIG. 5. It can be seen from FIG. 4 and FIG. 5 that, according to the present disclosure, the target power becomes positive at the time instant t2, that is, reverse power flow is eliminated at the time instant t2; and in the conventional technology, the target power becomes positive at a time instant t3, that is, the reverse power flow is eliminated at the time instant t3. Therefore, a duration of the reverse power flow is reduced according to the anti-reverse power flow method for a grid-connected device in the present disclosure, thereby improving the anti-reverse power flow effectiveness of the grid-connected device.

According to the present disclosure, as shown in FIG. 5, the target power changes to 200W at the time instant t2, which is greater than the second predetermined value. This means the grid-connected device does not meet the first predetermined maximum power condition, resulting in suboptimal economic performance of the grid-connected device. Therefore, the output power of the grid-connected device is gradually increased while the target power is gradually reduced until the time instant t3 at which the target power is reduced to the third predetermined value. Thus, the grid-connected device meets the second predetermined maximum power condition.

According to the present disclosure, as shown in FIG. 5, if the power of the load abruptly increases to 400W at a time instant t4, the target power changes to 300W which is greater than the second predetermined value. This means the grid-connected device does not meet the first predetermined maximum power condition. Therefore, the output power of the grid-connected device is gradually increased while the target power is gradually reduced until a time instant t6 at which the target power is reduced to the third predetermined value. Thus, the grid-connected device meets the second predetermined maximum power condition. It consumes a certain amount of time to control the grid-connected device, and the time from the time instant t4 to a time instant t5 is determined as the certain amount of time.

It should be noted that the solid line represents the power of the load, the dashed line represents the output power of the grid-connected device, and the dashdotted line represents the target power.

For implementing the above-described method embodiments, a controller for a grid-connected device is further provided according to an embodiment of the present disclosure. The controller includes at least one processor and a memory connected to the at least one processor.

The memory is configured to store a computer program.

The processor is configured to execute the computer program to cause the controller to perform the anti-reverse power flow method for the grid-connected device provided in any one of the above embodiments.

A grid-connected device is further provided according to an embodiment of the present disclosure. The grid-connected device includes a power converter and the above-described controller for the grid-connected device.

An AC side of the power converter is configured as an AC side of the grid-connected device and is configured to be connected to a load 01 and a power grid 02.

The controller is communicatively connected to the power converter. The controller is configured to monitor an operating state of the power converter.

It should be noted that the power converter is mature in the conventional technology and is not elaborated herein. In addition, the controller is further configured to analyze a scheduling operation to be performed by the grid-connected device through a built-in algorithm and regulate an output power of the grid-connected device.

A grid-connected system is further provided according to an embodiment of the present disclosure. The grid-connected system includes a grid-connected device described above.

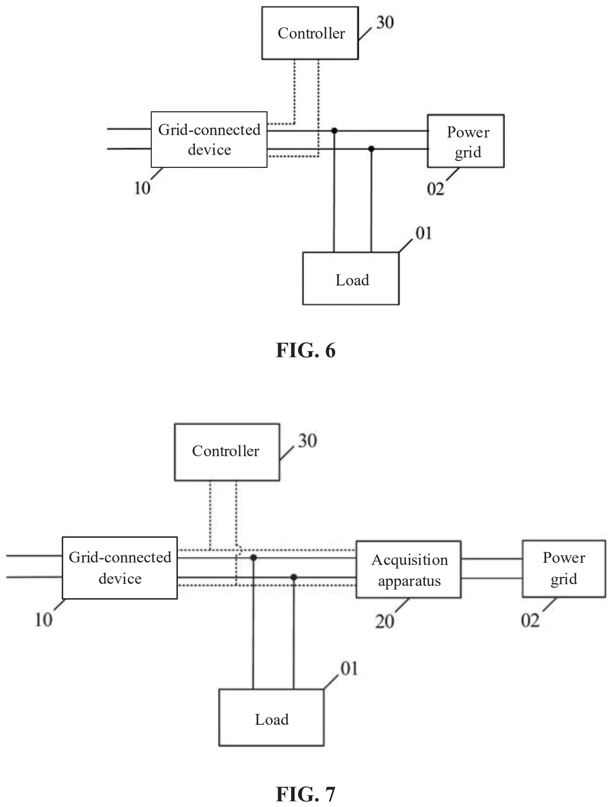

The controller in the grid-connected device may be arranged independently of the grid-connected device and may be represented by an independent controller 30 shown in FIG. 6. As shown in FIG. 6, the solid line represents an AC side of a power converter, and the dotted line represents the communication connection between the controller and the power converter.

Another implementation of the grid-connected system is provided according to another embodiment of the present disclosure, and the specific structural diagram is shown in FIG. 7. In the implementation, on basis of the implementations provided according to the above-described embodiments, the grid-connected system further includes an acquisition apparatus 20.

An AC side of a grid-connected device 10 is connected to one side of the acquisition apparatus 20, and the other side of the acquisition apparatus 20 is connected to the power grid 02, as shown by the solid line in FIG. 7.

The acquisition apparatus 20 is configured to acquire a target power. Further, the acquisition apparatus 20 is configured to acquire information such as current, voltage, electricity quantity and current direction flowing through the acquisition apparatus 20, and transmit the acquired information to the controller 30 for analysis and scheduling by the controller 30.

It should be noted that the target power is described in detail in the above embodiments and is not repeated herein.

In a case that the controller in the grid-connected device is arranged independently of the grid-connected device, the controller 30 is communicatively connected to the acquisition apparatus 20, as shown by the dotted line in FIG. 7. In addition, in this case, the controller 30 is further configured to monitor the target power fed back by the acquisition apparatus 20.

It should be noted that the controller 30 is further configured to analyze a scheduling operation to be performed by the grid-connected device 10 through a built-in algorithm and regulate the output power of the grid-connected device 10.

In an embodiment, the grid-connected device 10 and the acquisition apparatus 20 are connected to each other through power line carrier (PLC) communication, which, in practice, is not limited thereto, is determined depending on the actual situation, and thus is not limited herein. All implementations fall within the protection scope of the present disclosure.

In an embodiment, the grid-connected device 10 may include an inverter or a micro-inverter, which, in practice, is not limited thereto, is determined depending on the actual situation, and thus is not limited herein.

In a case that the grid-connected device 10 includes an inverter, a direct-current (DC) side of the grid-connected device 10 is connected to a photovoltaic string or a photovoltaic array.

In a case that the grid-connected device 10 includes a micro-inverter, the DC side of the grid-connected device 10 is connected to a photovoltaic module.

It should be noted that the photovoltaic module, the photovoltaic string, and the photovoltaic array are mature in the conventional technology, and thus are not elaborated herein.

Another implementation of the grid-connected system is further provided according to an embodiment of the present disclosure. Improvements are made in the implementation on basis of the implementation provided in the previous embodiment as follows.

The grid-connected device 10 and the acquisition apparatus 20 are connected to each other through PCL communication, the controller 30 and the grid-connected device 10 are communicatively connected to each other through PLC communication, and the controller 30 and the acquisition apparatus 20 are communicatively connected to each other through PLC communication.

Since the grid-connected device 10 and the acquisition apparatus 20 are connected to each other through PCL communication, the controller 30 and the grid-connected device 10 are communicatively connected to each other through PLC communication, the controller 30 and the acquisition apparatus 20 are communicatively connected to each other through PLC communication, and all communication information is transmitted along a power line in PLC communication, no additional cabling is required and signals are stable.

A computer program product is further provided according to an embodiment of the present disclosure. The computer program product is configured with computer-readable instructions. The computer-readable instructions, when executed on a controller, cause the controller to perform the anti-reverse power flow method for a grid-connected device according to any one of the above-described embodiments of the present disclosure.

A computer-readable storage medium is further provided according to an embodiment of the present disclosure. The computer-readable storage medium stores one or more computer programs. The one or more computer programs, when executed by a controller, cause the controller to perform the anti-reverse power flow method for a grid-connected device according to any one of the above-described embodiments of the present disclosure.

Based on the above description of the disclosed embodiments, the features documented in the various embodiments in this specification may be substituted or combined with each other to enable those skilled in the art to implement or use the present disclosure. Merely preferred embodiments of the present disclosure are described above and the present disclosure is not limited thereto. Although the present disclosure is disclosed as above with preferred embodiments, which are not intended to limit the present disclosure. For those skilled in the art, many variations, modifications or equivalent replacements may be made to the technical solutions of the present disclosure by using the methods and technical contents disclosed above, without departing from the scope of the technical solutions of the present disclosure. Therefore, any simple changes, equivalent variations and modifications made to the above embodiments according to the technical essence of the present disclosure without departing the content of the technical solutions of the present disclosure fall within the protection scope of the technical solutions of the present disclosure.

## Claims

1. An anti-reverse power flow method for a grid-connected device, comprising:
determining whether the grid-connected device meets a first predetermined reverse power flow condition; and
changing, in response to the grid-connected device meeting the first predetermined reverse power flow condition, an output power of the grid-connected device to a first predetermined value to control the grid-connected device not to meet a second predetermined reverse power flow condition.

2. The anti-reverse power flow method according to claim 1, wherein the first predetermined value equals 0.

3. The anti-reverse power flow method according to claim 1, wherein after the changing an output power of the grid-connected device to a first predetermined value to control the grid-connected device not to meet a second predetermined reverse power flow condition, or while the determining whether the grid-connected device meets a first predetermined reverse power flow condition, the anti-reverse power flow method further comprises:
gradually increasing, in response to the grid-connected device not meeting a first predetermined maximum power condition, the output power of the grid-connected device to control the grid-connected device to meet a second predetermined maximum power condition.

4. The anti-reverse power flow method according to claim 3, wherein
the first predetermined maximum power condition comprises: a target power being less than or equal to a second predetermined value, wherein
the target power represents a power flowing from a power grid to a load connected to the grid-connected device; and
the second predetermined maximum power condition comprises: the target power being less than or equal to a third predetermined value.

5. The anti-reverse power flow method according to any one of claims 1 to 4, wherein after the changing an output power of the grid-connected device to a first predetermined value to control the grid-connected device not to meet a second predetermined reverse power flow condition, the anti-reverse power flow method further comprises:
gradually reducing, in response to the grid-connected device meeting a third predetermined reverse power flow condition, the output power of the grid-connected device to control the grid-connected device not to meet a fourth predetermined reverse power flow condition.

6. The anti-reverse power flow method according to claim 5, wherein
the third predetermined reverse power flow condition comprises: a target power being less than a fourth predetermined value, wherein
the target power represents a power flowing from a power grid to a load connected to the grid-connected device; and
the fourth predetermined reverse power flow condition comprises: the target power being less than a fifth predetermined value.

7. The anti-reverse power flow method according to any one of claims 1 to 4, wherein
the first predetermined reverse power flow condition comprises: a target power being less than a sixth predetermined value, wherein
the target power represents a power flowing from a power grid to a load connected to the grid-connected device; and
the second predetermined reverse power flow condition comprises: the target power being less than a seventh predetermined value.

8. A controller for a grid-connected device, comprising: at least one processor and a memory connected to the at least one processor, wherein
the memory is configured to store a computer program; and
the at least one processor is configured to execute the computer program to cause the controller to perform the anti-reverse power flow method for the grid-connected device according to any one of claims 1 to 7.

9. A grid-connected device, comprising: a power converter and the controller for the grid-connected device according to claim 8, wherein
an alternating-current, AC, side of the power converter is configured as an AC side of the grid-connected device and is configured to be connected to a load and a power grid; and
the controller is communicatively connected to the power converter.

10. A grid-connected system, comprising the grid-connected device according to claim 9.

11. A computer program product, comprising computer-readable instructions, wherein the computer-readable instructions, when executed on a controller, cause the controller to perform the anti-reverse power flow method for the grid-connected device according to any one of claims 1 to 7.
